# EUROPEAN PATENT SPECIFICATION

(11) **EP 2 735 228 B1**
(45) Date of publication and mention of the grant of the patent: **09.01.2019**
(21) Application number: 13194003.3
(22) Date of filing: 22.11.2013
(51) Int. Cl.: A01K 95/02

(54) **Device for releasing a fishing weight**
Vorrichtung zur Freisetzung eines Angelbleis
Dispositif pour libération de plomb de pêche

(30) Priority: 22.11.2012 GB 201220996; 24.04.2013 GB 201307378
(43) Date of publication of application: 28.05.2014
(73) Proprietor: Roscar Angling Developments EU Limited, Worcester Park, Surrey KT4 7QW (GB)
(72) Inventor: Tiller, Carl, Ashford, Middlesex TW15 2SY (GB); Drewett, Ross, Tolworth, Surrey KT6 7PF (GB)
(74) Representative: King, Alex

(56) References cited:
- WO-A1-2011/087427
- GB-A- 2 373 982
- JP-A- H11 155 446
- US-A- 2 359 588
- US-A- 4 267 659

## Description

The present invention relates to a device used in fishing, and in particular, to a device which allows the dumping or release of fishing weights when a fish is hooked by way of the forces exerted by the fish and the angler pulling back on the line.

A "fishing rig" is a set-up of fishing line designed to catch a particular type of fish. Weights (which for historical reasons are still often referred to as "leads" even though they may not contain any lead) are used in many fishing rigs to weigh down the rig. Examples of known rigs are "helicopter rigs" and "chod rigs" which are generally used for carp fishing but can be used in other types of fishing, and where the weights are used to keep the fishing rig on the bottom of the lake or river to enable these rigs to work effectively.

A number of problems exist in the use of weights, not least related to fish welfare. For example, when a fish is caught on a hook and is pulling against the line, the weight can pull on and cause the hook to move in the mouth of the fish causing damage to the fish mouth and potentially loss of the fish for the angler.

For the above reasons, devices are known which either maintain a distance between the weight and the hook, seeking to minimise physical damage to the fish, or which seek to release the weight during the fight when a fish is hooked.

These latter may be referred to as "lead dumpers" and included among such devices are devices in which a relatively thin line is connected to the weight which is designed to break relatively easily.

However, such devices have been found to be unreliable. Often a weight becomes detached when no fish is on the hook, and at the other end of the spectrum the weight is often not released even when a fish is hooked.

Other devices are known which are specific to particular types of fishing, see e.g. GB 2 373 982 A and US 4 267 659 A.

WO 2011/087427, for example, describes an "in-line" rig for coupling a weight when deep sea trolling. An "in-line" rig is a rig in which the weight is connected to the mainline or leader between the reel and a hook or hookline, whilst "trolling" is a method of fishing from a moving boat. A feature of trolling generally, and hence of the rig in WO 2011/087427, is that it need not be cast. In addition, in WO 2011/087427 the weight is initially fixed in place on the fishing line, and when a fish is hooked the weight is uncoupled so it can move along the line. However, the weight is not released from the fishing line/rig in this system, but retained thereon. This weight can therefore still cause damage to a hooked fish.

US 2,359,588 and JP 11155446 A are further examples of "in-line" rigs designed to be suitable for sea fishing. Such rigs are known in coarse fishing and readily used.

The present invention relates to a new device which solves the above mentioned problems, and in particular reliably detaches/releases a weight when a fish becomes hooked.

According to the invention described in claim 1, there is provided a device for releasing a fishing weight from a Paternoster rig when a fish is hooked.

### Definitions

As used herein, the following terms have the following meanings:
"Backbead": A small bead threaded onto the fishing line upline of the hookline. It is generally pushed over a piece of silicone or other known material.
"Chod Rig": A rig, similar to the helicopter rig, designed for fishing over weed and silt.
"Fishing line": A generic term used herein to refer any part of the fishing line including the mainline, leader and hookline.
"Helicopter Rig": A type of Paternoster rig in which the hookline not only branches from the mainline or leader upline of the weight but can rotate freely about the mainline or leader. This type of rig is generally, but not exclusively, used for carp fishing.
"Hookline": A short piece of line between the mainline or leader and a hook (may also be referred to as a "hooklength").
"In-line rig": A rig in which the weight is connected to the mainline or leader between the reel and a hook or hookline.
"Leader": A length of line heavier than the mainline connected to the mainline. Part of the rig.
"Mainline": The fishing line that is spooled onto a reel and in use runs from the reel to the rig.
"Paternoster rig": A rig in which the weight is located at the end of the mainline or leader, and a hookline branches from the mainline or leader upline of this.
"Release": To release the weight such that it falls off of the rig i.e. is ejected from the rig.
"Rig": The equipment connected at the end of the mainline, including hooklines, hooks, weights and leaders. Will generally be a set-up designed to catch a particular type of fish.
"Terminal tackle": Another term for "rig".
"Trolling": A method of fishing from a moving boat.
"Up tiding:" A method of fishing against the flow of water or tide.
"Upline": A direction towards the fishing reel.

The present invention provides a device for releasing a fishing weight from a Paternoster rig. As is clear from the definition above, a Paternoster rig is a rig in which the weight is located at the end of the mainline or leader, and a hookline branches from the mainline or leader upline of this (rather than being a continuation of the mainline or leader).

The rig can therefore be distinguished from rigs such as "in-line rigs" where the weight is connected to the mainline or leader upline of the hookline.

Paternoster rigs are used for freshwater fishing as well as sea fishing. In-line rigs are used for "trolling", beach fishing and up tiding but can also be used in fresh water fishing. As defined above "trolling" is a method of fishing from a moving boat, and hence generally (but not specifically) directed to sea fishing. A key difference is that rigs used for trolling do not have to be cast but can simply be lowered from the boat, whereas freshwater fishing rigs generally need to be cast.

In the present invention the device is preferably for releasing a fishing weight from a "helicopter rig" or a "chod rig" in which the hookline is able to rotate freely around the mainline or leader upline of the weight. The connection can be achieved by any suitable connector that allows the rotation of the hookline, for example, a swivel connector or similar.

A backbead can be set on the rig or main line, and generally is used upline of the connector to prevent the hookline travelling up the fishing line.

The rig is configured such that the hookline can move towards the device of the present invention when a fish is hooked and pulls thereon.

The terms "helicopter rig" and "chod rig" are often used interchangeably, and there can be overlap between the different rigs.

For example, the hookline in a helicopter rig is usually located between a backbead and a second bead located between the hookline and the weight. This allows the hookline to be held a desired distance from the weight. The bead between the hookline and the weight is pushed towards the weight when a fish is hooked (which in the present invention allows the hookline to move towards the device of the present invention when a fish is hooked and pulls thereon).

In a chod rig usually only a backbead is used. However, rigs with two beads are also known to be referred to as chod rigs.

The hookline in a chod rig is usually shorter than in a helicopter rig. For example the hookline in a chod rig is most usually in the range 2.5 to 10 cm long, whereas in a helicopter rig it is usually (but not always) more than 10 cm long. The hookline is usually a relatively stiff line on a chod rig compared to a helicopter rig e.g. monofilament or fluorocarbon line may be used in a chod rig but a braided hookline in a helicopter rig. Again however, stiff line may be used in helicopter rigs.

In general, the chod rig is designed for fishing over weed but may also be fished over gravel, silt, sand or clay. The helicopter rig may also be used over gravel, silt, sand or clay, but is generally not preferred over weed.

The present invention relies on a pulling force of a hooked fish on a fishing line to move the sleeve from the first position in which the one or more weights is held on the holding means to a second position which allows the one or more weights to be released. As defined herein, and as defined above, the term "release" means that the weight falls off of the rig i.e. is ejected from the rig. Thus, the weight cannot cause damage to the hooked fish nor become entangled, for example with weed, during the playing of the fish. The sleeve is biased in the first position, which means that without the pulling force of the hooked fish the sleeve remains in the first position (and the weight remains on the holding means).

The device comprises:
i) a connecting means for attaching the device to a fishing line,
ii) a holding means for holding one or more fishing weights,
iii) an outer sleeve, and
iv) an inner sleeve which sits at least partially within the outer sleeve, and which in a first position will hold the one or more weights on the holding means and in a second position allows the one or more weights to be released from the holding means, the inner sleeve being biased in the first position,
wherein the device is configured such that the application of a pulling force on the fishing line when a fish is hooked causes the inner sleeve to move from the first position to the second position.

The inner sleeve sits at least partially in an outer sleeve. The inner sleeve is biased against the outer sleeve, and the first and second positions result from movement of the inner sleeve relative to the outer sleeve.

Thus, the first and second positions are defined by the relative position of the inner and outer sleeves.

The connecting means for attaching the device to a fishing line may be any suitable means for connecting the fishing line. An example would be an eyelet to which the fishing line is tied. The connecting means can be a means by which the fishing line is tied directly to the device, for example an eyelet located on the device. Alternatively, the connecting means can be a pocket or other compartment within the device in which a half swivel or other connector is held, said half swivel or other connector connecting to the fishing line. The advantage of such a system is that it can be easier to connect a fishing line to such a connector external to the device and to then place the connector in the pocket/compartment than to try and tie the line directly to a connector within the device. In the preferred device with inner and outer sleeves, the connecting means is preferably a connecting means for attaching the inner sleeve to a fishing line. A particularly preferred example, as described further below, is a pocket or other compartment within the inner sleeve in which a half swivel or other connector is held. In use the fishing line is connected to the connector, and when a fish is hooked and pulls on the fishing line this in turn pulls on the connector within the inner sleeve, which also causes the inner sleeve to move.

The device may be attached to the mainline (in which case the hookline is connected to the mainline upline of this). Preferably the device is connected to a leader, which itself is connected to the mainline. The hookline is preferably connected to the leader upline of the device (but downline of the mainline).

In a particularly preferred embodiment, there is provided an entrance on the outer sleeve by which a fishing line may be passed through the outer sleeve, preferably entering at or near the end thereof, and connected to the inner sleeve (either "directly" to the inner sleeve or via a connector sitting in a pocket or compartment as previously described).

In particular, there is preferably provided a toroidal entrance to the outer sleeve, which as used herein is an entrance in the form of a hole in the centre of a ring, through which a fishing line can be passed. The upper surface of the ring should be curved so that the fishing line can enter the device without snagging or fraying on the device regardless of the direction in which a hooked fish may pull.

The curved surface at the toroidal entrance, in addition to enabling the fishing line to enter the device without snagging or fraying, also allows the pulling force of hooked fish, which will in general be trying to pull away from the angler, to still act on the outer sleeve, and thereby move it relative to the inner sleeve. This is described further in the Example below.

The holding means for the one or more fishing weights is preferably located such that the fishing weight is connected to the outer sleeve. The holding means may be a separable holding means which is connected to the outer sleeve or the holding means may be an integral part of the outer sleeve.

The holding means may be any connecting means suitable for holding the weight and which allows it to be released in the second position. Simple examples would include a pin. Preferably it is a hook.

Although more than one weight may be put on the holding means, usually a single weight will be used.

In the first position, the inner sleeve sits over the holding means, preventing any weight from being released. A pulling force on the fishing line pulls the inner sleeve within the outer sleeve and in a direction such that the holding means is then exposed, allowing the weight to be released.

The bias which keeps the sleeve in the first position when no pulling force is applied preferably returns the sleeve to the first position from the second position if a pulling force is stopped. It is particularly preferred that the inner sleeve is spring-biased i.e. a spring is used to provide the bias.

According to the invention comprising inner and outer sleeves the spring may sit inside the outer sleeve and bias the inner sleeve in the first position by pushing against the outer sleeve. The movement from the first to the second position may be obtained by compression of the spring. If the pulling force is stopped the spring will expand again and the inner sleeve returns to the first position.

To enable a weight to be placed on the holding means in the assembled device the sleeve should be moved to the second position (against the bias). In a preferred embodiment, a button or similar means may be provided on the device, preferably on the sleeve and most preferably connected to the inner sleeve in this embodiment, which the angler can push to move the sleeve to the second position.

Although the device is designed to be used such that the application of a pulling force on the fishing line when a fish is hooked causes the sleeve to move from the first position to the second position, it can nevertheless also be provided with a means to temporarily disable this functionality. For example, a locking pin can be provided which can prevent movement of the sleeve from the first position to the second position. Alternatively a locking spacer can be included which can be inserted in the device to prevent the movement. Such can be used when fishing where release of the weight is not desired.

In the device with inner and outer sleeves it is preferred that the inner and outer sleeves are configured such that rotation of the inner sleeve inside the outer sleeve is restricted, and preferably cannot occur.

Examples which would enable this include one or more or channels on either the outside of the inner sleeve or the inside of the outer sleeve (or both) which are aligned with the direction of movement from the first to second position, and corresponding protrusions or ridges on the other of the outside of the inner sleeve and the inside of the outer sleeve which sit within the channels in the assembled device. These would allow movement from the first to the second position i.e. in the direction of the channels, but prevent rotational movement.

The button or similar means which can be provided on the device which the angler can push to move the sleeve to the second position may also act to prevent the rotation, and hence is an example of the above, as described further below.

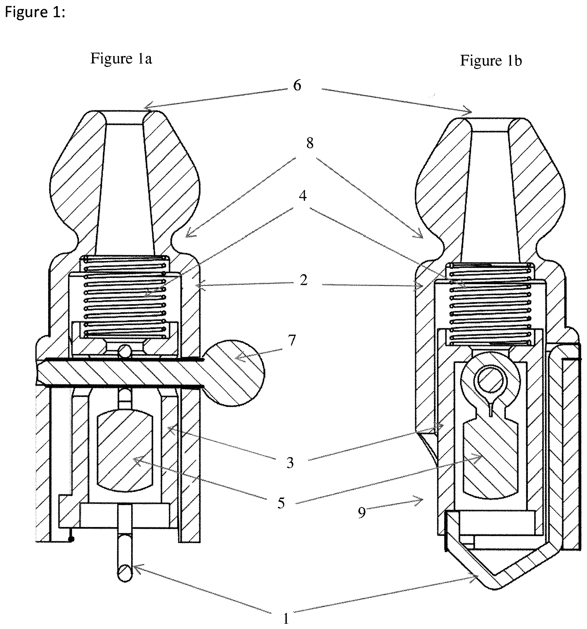

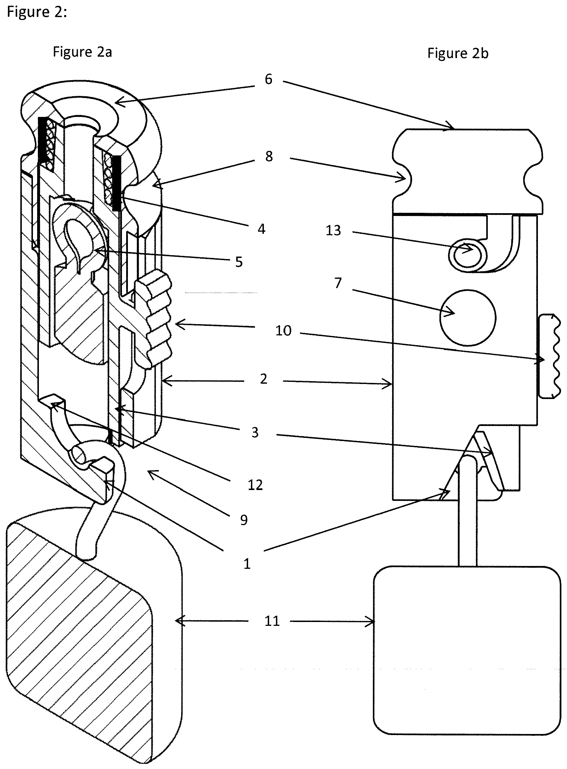

The device according to the present invention may be further exemplified by reference to Figures 1 and 2.

With reference to Figures 1a and 1b, the device comprises a hook (1), on which a weight is placed (not shown), and which is at the base of an outer sleeve (2). In order to enable this hook to be easily distinguished from the fishing hook which will also be referred to in the Example, this hook (1) will hereinafter be referred to as a "weight clip". Inside the outer sleeve is an inner sleeve (3). The inner sleeve is biased by a spring (4), which in the Figure pushes the inner sleeve downwards towards the base of the device. The inner sleeve (3) is biased against the weight clip on the outer sleeve which also prevents the inner sleeve from falling out of the device.

Inside the inner sleeve is a pocket (not numbered, shown by non-shaded area) in which there is a connector (5), in this case a half swivel connector, to which the fishing line is connected in use.

In the first position, as most clearly shown in Figure 1b, the base on the inner sleeve (3) covers the open side of the weight clip (1) and thereby prevents the weight from coming off of the weight clip (1).

At the top of the outer sleeve there is provided an entrance (6) through which a fishing line can be passed, and connected to the inner sleeve (3). The entrance has a curved shape which allows the fishing line to enter the device without snagging or fraying.

Also shown in Figure 1 is an optional locking pin (7), which can prevent movement of the sleeve from the first position to the second position and which can be used when fishing where release of the weight is not desired, and a recess (8) suitable for an o-ring. The purpose of this recess is described further below.

In the second position (not shown but would be towards the entrance (6) in Figure 1) the inner sleeve (3) is moved relative to the outer sleeve (2) and also therefore relative to the weight clip (1), which exposes the open side of the weight clip (1), and allows the weight to fall from the weight clip and be released from the fishing rig.

As shown in Figure 1b a portion of the outer sleeve (2) has been cut-out (9) adjacent to the end of the weight clip (1). This facilitates allowing the weight to fall off of the weight clip.

Especially when used with a cut-out (9) or locking pin (7), it is preferred that the inner sleeve is not able to rotate relative to the outer sleeve. For the former this is so that the cut-out and weight clip end remain adjacent, and for the latter so that the holes in the inner and outer sleeves through which the pin passes stay aligned.

With reference to Figures 2a and 2b, reference numbers (1) to (9) are as for Figure 1. Figure 2 shows a similar device to Figure 1 although the spring is located further within the upper part of the device as can be seen in Figure 2a. Figure 2 further shows a button (10) which enables the angler to manually move the device from the first to the second position. In particular, the button (10) sits outside the outer sleeve but is connected to the inner sleeve. A slot is provided in the outer sleeve (not numbered), which enables the button to be moved up/down relative to the outer sleeve and thereby enables the angler to manually move the device from the first to the second position. This button/slot combination also prevents the inner sleeve rotating within the outer sleeve.

Further, Figure 2 shows a weight (11) attached to the weight clip.

Figure 2a shows the device with the inner sleeve (3) in the second position. The spring (4) is compressed and the inner sleeve (3) is moved up inside the outer sleeve (2) and relative to the weight clip (1) so as to expose the open side of the weight clip (1) at the cut-out (9) of the outer sleeve (2). In preparation for fishing the inner sleeve may be moved manually to the second position using the button (10) to allow the weight (11) to be placed on the weight clip (1). When fishing, the pull of the hooked fish on the fishing line and thereby on the connector (5) pulls the connector (5) against the inner sleeve (3) and thereby moves the inner sleeve to the second position, which allows the weight to fall from the weight clip.

Figure 2a also shows a variation on the means by which the inner sleeve (3) is biased in the first position. In particular, Figure 2a shows a shoulder (12) provided on the inside of the outer sleeve (2)/on the back of weight clip (1). In the first position the base of the inner sleeve (3) sits on this shoulder (12), biased against this by the spring (4).Figure 2b shows in schematic form an external view of the device of Figure 2a when in the first position. In addition to the features shown in Figure 2a, Figure 2b shows the locking pin (7) provided on the outside of the device at right angles to the button (10).

As noted above, the locking pin may be replaced by a locking spacer. In the device shown this locking spacer would be located within the top of the device next to the spring (4), causing the spring to be compressed even when the inner sleeve (3) is in the first position. The locking spacer thereby prevents the usual compression of the spring (4) that would enable the inner sleeve (3) to move to the second position.

As shown in Figures 2a and 2b the base of the inner sleeve (3) is tapered to that it is "higher" where it sits on the shoulder (12) compared to the portion of the inner sleeve (3) which sits over the weight clip (1). The sides of the inner sleeve are also "cut-away" as most clearly seen in Figure 2b. This enables the swivel connector at the top of the weight (11) to be accommodated in the device.

Figure 2b also shows part of a connecting means, in this case a bayonet connector (13), by which the top part of the device (cap) may be connected to the inner and outer sleeves when assembling the device. Other connections, such as a threaded connection, could be used instead of the bayonet connection to connect the cap.

With reference to Figure 2 in particular, the device may be assembled ready for use by the following steps:
1) With the device disassembled, a half-swivel (5) connected to a leader is placed inside the inner sleeve (3), with the lead core passing out through the entrance (6),
2) The inner sleeve is placed inside the outer sleeve (2), and the spring (4) placed in position on top of the inner sleeve,
3) The cap (8) is locked onto the top of the outer sleeve (2) via the bayonet fitting (13) to complete the assembled device, without the weight (11),
4) Using the button (10) the device is manually moved to the second position and the weight (1) attached, and
5) The button (10) is released to complete the assembled device with the weight (11) attached.

More generally, a further advantage of the present invention is that heavier weights can be used without fear of harm to the fish due to the weight. This in turn enables further casting to be achieved.

The present invention is particularly suitable for use with barbless hooks. Many fisheries now require the use of barbless hooks for fish welfare reasons, but hooked fish can be more likely to eject barbless hooks. This can especially be the case when the weight remains on the rig and becomes entangled, for example with weed, during the playing of a hooked fish. The present invention releases the weight from the rig when a fish is hooked, which prevents the possibility of the weight becoming entangled, and thereby removes the risk of entanglement of the weight.

In a yet further embodiment, the device on the outside may be provided with a recess which is suitable for an o-ring. This is shown as (8) in Figures 1 and 2 as noted.

In particular, this allows a PVA (or other) bait bag to be connected over the device and held in place by an o-ring. PVA bait bags and other PVA products are widely used in fishing as a means to localise pieces of fishing bait around the hook bait. The bait bags are filled with bait and attached to the end of a fishing line near to the hook. The fishing line with the bag thereon is then cast, after which the bag dissolves in the water, freeing the bait, but the use of the bags during casting ensures that the bait is maintained in the vicinity of the hook.

In a yet further preferred embodiment, the device may be used, and the bait bag may be filled, using an applicator such as described in GB 2445323.

The device according to the present invention may be sold as is, or may be sold as a partial or complete Paternoster rig i.e. with a leader attached to the connecting means of the device, with a hookline provided about the leader, and optionally with a weight already attached. Then the rig is simply attached to the mainline by the angler.

It is also possible that the device according to the present invention may be sold as a kit of parts, either to assemble just the device, or for the rig as a whole.

Thus, in another aspect a kit is provided for forming the device according to the present invention.

The kit will comprise unassembled parts of the device. For example, the kit may comprise inner and outer sleeves and a spring suitable for biasing the inner sleeve in the first position. With reference to the device of Figure 2, for example, the kit may comprise inner and outer sleeves, a spring suitable for biasing the inner sleeve in the first position, a cap comprising the toroidal entrance by which the fishing line may be passed through the outer sleeve and connected to the inner sleeve and a swivel or other connector, for example a half swivel, for connecting the device to the fishing line. The device may be assembled by placing the inner sleeve and spring inside the outer sleeve, and connecting them together to form the device as described above. The kit may comprise instructions on how to assemble the device, either per se or as part of a fishing rig.

A non-assembled device may be advantageous because it may be easier to connect the mainline or leader to the inner sleeve prior to assembly, again as described above. In another aspect a device is provided for connecting a fishing weight to a fishing line which device comprises:
i) a connecting means for attaching the device to a fishing line,
ii) a holding means for holding one or more fishing weights, and
iii) a recess suitable for an O-ring.

In particular, the presence of a recess on the device allows an O-ring to be placed over the top of a PVA or other bait bag and then pushed over the top of the device and in to the recess. This compresses the bait bag into the recess, fixing it in place on the device.

Thus, the device according to this embodiment holds both the weight and a bait bag in place.

The device is preferably a device for releasing a fishing weight when a fish is hooked, for example as described in the first aspect of the present invention. In a yet further aspect, there is provided an improved bait bag, the bait bag having a diamond shape with an opening at one corner.

In particular, conventional bait bags are square, rectangular or triangular, with one side completely open. For attaching to the device according to the present invention it is preferred that the bag has a diamond shape with an opening at one corner. A corner opening is smaller than a side opening and provides a better fit over the device according to the present invention. This also allows an o-ring to be more easily used to connect the bag to the device.

The diamond shape is preferably a diamond shape other than a square, which may also be referred to as an elongated diamond, and the open corner is preferably provided at one of the ends with the smaller internal angles. (A non-square diamond has equal opposite angles, two of which will be larger than 90° and two of which will be less than 90°, these latter therefore being the smaller internal angles.) A further advantage is that the elongated diamond shape (compared to a square) allows better casting.

The bait bag is preferably a PVA bait bag. More generally, PVA bait bags are widely available in the fishing industry, and the bait bag may otherwise be conventional. Some examples are described in GB 2445323.

### Example

The operation of the device of the present invention may be illustrated with respect to Figures 1 and 2, and in application to a helicopter rig which is a rig used particularly, but not solely, for carp fishing.

In the conventional version of this rig the fishing line from the rod which is known as the Mainline or Braided mainline is connected to a "lead core leader" or "safe zone leader" or other type of leader. This is generally connected at its end directly to a weight which is fixed/secured by way of swivel and clip. About the lead core leader there is provided a hookline usually attached to the line by way of a swivel connector, connected to a short length of line with a hook at the other end. This length of line and the hook can rotate about the mainline.

These rigs are useful, for example when fishing in silt or weed. The weight sinks into the silt or weed, whilst the hookline can be positioned away from the weight between one or two beads or any other means which allow the hook line to slide up the leader and the hook will therefore remain on top of the silt or weed. However, when a carp or other fish is hooked the hookline pulls back down to the weight when the fisherman strikes, the weight then flies around whilst the fish is struggling to get off of the hook. This compromises the hook hold and can work the hook free of the fish and result in bouncing the hook out and ultimately loss of the fish.

When using the device of the present invention, and with reference to Figures 1 and 2, the lead core or other rig material is passed through the entrance (6) and connected to the inner sleeve (3) of the device, whilst the weight is connected on the weight clip (1).

When a carp becomes caught on the fishing hook it will try to pull away from the device by pulling on the hook and therefore on the hookline, whilst the angler will try to reel the fish in by pulling on the mainline/braided line or other via the fishing rod. In this particular embodiment the hookline will be pulled down the Mainline to the top of the device. The pulling of this line by the hooked fish over the curved surface allows the pulling force of hooked fish to act on the outer sleeve and thereby move it relative to the inner sleeve. The curved surface enables this to occur regardless of the specific direction the fish pulls. The oppositely directed forces of the fish and angler will therefore result in the inner sleeve moving upwards within the outer sleeve to the second position. The weight will fall off of the weight clip by the movement caused by the respective struggles of the fish and angler. This weight will drop to the bottom of the water, where it cannot harm the fish whilst the angler plays the fish and tries to land the fish.

It should be noted that it is the application of a pulling force on the hookline when a fish is hooked that causes the sleeve to move from the first position to the second position, and in particular by the pulling of the fish against the angler. In the absence of the hooked fish providing the counterforce acting on the outer sleeve the angler reeling in the line would simply reel in the whole device.

## Claims

1. A device for releasing a fishing weight from a Paternoster rig when a fish is hooked, which device comprises:
i) a connecting means (5) for attaching the device to a fishing line,
ii) a holding means (1) for holding one or more fishing weights, and
iii) an outer sleeve (2), and
iv) an inner sleeve (3) which sits at least partially within the outer sleeve (2), and which in a first position will hold the one or more weights on the holding means (1) and in a second position allows the one or more weights to be released from the holding means (1), the inner sleeve (3) being biased in the first position,
wherein the device is configured such that the application of a pulling force on the fishing line when a fish is hooked causes the inner sleeve (3) to move from the first position to the second position relative to the outer sleeve.

2. A device according to claim 1 wherein the fishing rig is a helicopter rig or a chod rig.

3. A device according to claim 1 or claim 2 which has an entrance (6) by which a fishing line may be passed through the outer sleeve (2) and connected to the device, and preferably wherein there is provided a toroidal entrance to the outer sleeve (2) through which a fishing line can be passed, the upper surface of the ring being curved so that a fishing line can enter the device without snagging or fraying on the device regardless of the direction in which a hooked fish may pull.

4. A device according to any one of the preceding claims wherein the connecting means is a pocket or other compartment within the device in which a half swivel or other connector (5) is held, said half swivel or other connector (5) connecting to the fishing line, and preferably is a pocket or other compartment within the inner sleeve (3) in which a half swivel or other connector (5) is held.

5. A device according to any one of claims 3 to 4 wherein the holding means (1) for the one or more weights is located such that the fishing weight is connected to the outer sleeve (2).

6. A device according to any one of the preceding claims wherein a portion of the outer sleeve (2) is cut-out adjacent to the end of the holding means (1).

7. A device according to any one of the preceding claims wherein the inner and outer sleeves are configured such that rotation of the inner sleeve (3) inside the outer sleeve (2) is restricted, and preferably cannot occur.

8. A device according to any one of the preceding claims wherein the inner sleeve (3) is spring-biased.

9. A device according to claim 8 wherein the spring sits inside the outer sleeve (2) and biases the inner sleeve (3) in the first position by pushing against the outer sleeve (2).

10. A device according to any one of claims 1 to 7 wherein the bias which keeps the inner sleeve (3) in the first position when no pulling force is applied returns the inner sleeve (3) to the first position from the second position if a pulling force is stopped.

11. A device according to any one of the preceding claims wherein the holding means (1) is a hook.

12. A device according to any one of the preceding claims wherein a button (10) or similar means is provided on the device which the angler can push to move the inner sleeve (3) to the second position.

## Patentansprüche

1. Vorrichtung zum Freisetzen eines Angelbleis von einer Paternostermontage, wenn ein Fisch angebissen hat, wobei die Vorrichtung Folgendes umfasst:
i) ein Verbindungsmittel (5) zum Befestigen der Vorrichtung an einer Angelschnur,
ii) ein Haltemittel (1) zum Halten von einem oder mehreren Angelbleien, und
iii) eine äußere Hülse (2), und
iv) eine innere Hülse (3), die zumindest teilweise innerhalb der äußeren Hülse (2) sitzt und die in einer ersten Position das eine oder die mehreren Bleie an dem Haltemittel (1) hält und in einer zweiten Position dem einen oder den mehreren Bleien ermöglicht, von dem Haltemittel (1) freigesetzt zu werden, wobei die innere Hülse (3) in der ersten Position vorgespannt ist,
wobei die Vorrichtung so ausgelegt ist, dass das Wirken einer Zugkraft auf die Angelschnur, wenn ein Fisch angebissen hat, bewirkt, dass sich die innere Hülse (3) aus der ersten Position in die zweite Position relativ zur äußeren Hülse bewegt.

2. Vorrichtung nach Anspruch 1, wobei die Angelmontage ein "Helicopter Rig" oder ein "Chod Rig" ist.

3. Vorrichtung nach Anspruch 1 oder Anspruch 2, die einen Eingang (6) hat, über den die Angelschnur durch die äußere Hülse (2) geführt und mit der Vorrichtung verbunden werden kann, und wobei vorzugsweise da ein torusförmiger Eingang zur äußeren Hülse (2) vorgesehen ist, durch den eine Angelschnur geführt werden kann, wobei die obere Fläche des Rings gekrümmt ist, sodass eine Angelschnur in die Vorrichtung eintreten kann, ohne sich an der Vorrichtung zu verhaken oder durchzuscheuern, unabhängig von der Richtung, in die ein eingehakter Fisch ziehen kann.

4. Vorrichtung nach einem der vorhergehenden Ansprüche, wobei das Verbindungsmittel eine Tasche oder ein anderes Fach innerhalb der Vorrichtung ist, in dem ein halber Wirbel oder ein anderer Verbinder (5) gehalten wird, wobei der halbe Wirbel oder andere Verbinder (5) mit der Angelschnur verbunden ist, und vorzugsweise eine Tasche oder ein anderes Fach innerhalb der inneren Hülse (3) ist, in der ein halber Wirbel oder ein anderer Verbinder (5) gehalten wird.

5. Vorrichtung nach einem der Ansprüche 3 bis 4, wobei das Haltemittel (1) für das eine oder die mehreren Gewichte so positioniert ist, dass das Angelblei mit der äußeren Hülse (2) verbunden ist.

6. Vorrichtung nach einem der vorhergehenden Ansprüche, wobei ein Teil der äußeren Hülse (2) angrenzend an das Ende des Haltemittels (1) ausgeschnitten ist.

7. Vorrichtung nach einem der vorhergehenden Ansprüche, wobei die innere und äußere Hülse so ausgelegt sind, dass Drehung der inneren Hülse (3) innerhalb der äußeren Hülse (2) eingeschränkt ist und vorzugsweise nicht eintreten kann.

8. Vorrichtung nach einem der vorhergehenden Ansprüche, wobei die innere Hülse (3) federvorgespannt ist.

9. Vorrichtung nach Anspruch 8, wobei die Feder im Inneren der äußeren Hülse (2) sitzt und die innere Hülse (3) in der ersten Position vorspannt durch Drücken gegen die äußere Hülse (2).

10. Vorrichtung nach einem der Ansprüche 1 bis 7, wobei die Vorspannung, die die innere Hülse (3) in der ersten Position hält, wenn keine Zugkraft gewirkt wird, die innere Hülse (3) aus der zweiten Position auf die erste Position zurückgestellt, wenn eine Zugkraft gestoppt wird.

11. Vorrichtung nach einem der vorhergehenden Ansprüche, wobei das Haltemittel (1) ein Haken ist.

12. Vorrichtung nach einem der vorhergehenden Ansprüche, wobei ein Knopf (10) oder ein ähnliches Mittel an der Vorrichtung vorgesehen ist, den bzw. das der Angler drücken kann, um die innere Hülse (3) in die zweite Position zu drücken.

## Revendications

1. Dispositif de libération d'un plomb de pêche d'un montage à chapelet lorsqu'un poisson est accroché, ledit dispositif comprenant:
i) un moyen de connexion (5) pour attacher le dispositif à une ligne de pêche,
ii) un moyen de retenue (1) pour retenir un ou plusieurs plomb(s) de pêche, et
iii) un manchon extérieur (2) et
iv) un manchon intérieur (3), qui est situé au moins en partie à l'intérieur du manchon extérieur (2), et qui dans une première position retiendra lesdits un ou plusieurs plomb(s) de pêche sur le moyen de retenue (1) et dans une seconde position permet auxdits un ou plusieurs plomb(s) de pêche d'être libéré(s) du moyen de retenue (1), le manchon intérieur (3) étant poussé dans la première position,
dans lequel le dispositif est configuré de telle manière que l'application d'une force de traction à la ligne de pêche lorsqu'un poisson est accroché entraîne le manchon intérieur (3) à se déplacer de la première position à la seconde position par rapport au manchon extérieur.

2. Dispositif selon la revendication 1, dans lequel le montage de pêche est un montage hélicoptère ou un chod rig.

3. Dispositif selon la revendication 1 ou la revendication 2, qui présente une entrée (6) par laquelle une ligne de pêche peut être menée à travers le manchon extérieur (2) et connectée au dispositif, et de préférence dans lequel il est prévu une entrée toroïdale vers le manchon extérieur (2) à travers laquelle une ligne de pêche peut être menée, la surface supérieure de l'anneau étant incurvée de telle manière qu'une ligne de pêche puisse entrer dans le dispositif sans s'accrocher ou s'effilocher sur le dispositif quelle que soit la direction dans laquelle un poisson accroché peut tirer.

4. Dispositif selon l'une quelconque des revendications précédentes, dans lequel le moyen de connexion est une poche ou un autre compartiment à l'intérieur du dispositif, dans lequel un demi-pivot ou un autre connecteur (5) est maintenu, ledit demi-pivot ou autre connecteur (5) se connectant à la ligne de pêche, et est de préférence une poche ou un autre compartiment à l'intérieur du manchon intérieur (3) dans lequel un demi-pivot ou un autre connecteur (5) est maintenu.

5. Dispositif selon l'une quelconque des revendications 3 à 4, dans lequel le moyen de retenue (1) pour lesdits un ou plusieurs plomb(s) de pêche est situé de telle manière que le plomb de pêche soit connecté au manchon extérieur (2).

6. Dispositif selon l'une quelconque des revendications précédentes, dans lequel une partie du manchon extérieur (2) porte une découpe à proximité de l'extrémité du moyen de retenue (1).

7. Dispositif selon l'une quelconque des revendications précédentes, dans lequel les manchons intérieur et extérieur sont configurés de telle manière qu'une rotation du manchon intérieur (3) à l'intérieur du manchon extérieur (2) soit limitée, et de préférence ne puisse pas se produire.

8. Dispositif selon l'une quelconque des revendications précédentes, dans lequel le manchon intérieur (3) est poussé par un ressort.

9. Dispositif selon la revendication 8, dans lequel le ressort est placé à l'intérieur du manchon extérieur (2) et pousse le manchon intérieur (3) dans la première position en poussant contre le manchon extérieur (2).

10. Dispositif selon l'une quelconque des revendications 1 à 7, dans lequel la poussée qui maintient le manchon intérieur (3) dans la première position lorsqu'aucune force de traction n'est appliquée renvoie le manchon intérieur (3) dans la première position à partir de la seconde position si une force de traction est arrêtée.

11. Dispositif selon l'une quelconque des revendications précédentes, dans lequel le moyen de retenue (1) est un crochet.

12. Dispositif selon l'une quelconque des revendications précédentes, dans lequel il est prévu sur le dispositif un bouton (10) ou un moyen similaire, sur lequel le pêcheur peut appuyer pour déplacer le manchon intérieur (3) vers la seconde position.
